# EUROPEAN PATENT APPLICATION

(11) **EP 2 533 159 A2**
(43) Date of publication of application: **12.12.2012**
(21) Application number: 12166785.1
(22) Date of filing: 04.05.2012
(51) Int. Cl.: G06F 13/40

(54) **Methods, devices and computer program products for establishing a connection between an electronic device and a peripheral device**

(30) Priority: 08.06.2011 US 201113156024
(71) Applicant: Sony Ericsson Mobile Communications AB, 221 88 Lund (SE)
(72) Inventor: Kristiansson, Per Ingemar, 232 91 Arlöv (SE)
(74) Representative: Valea AB

(57) **Abstract**

An electronic device includes a display, a detection module that is configured to detect a presence of a peripheral device that is located proximate to the electronic device and a peripheral management module that is configured to present instructions for connecting the peripheral device to the electronic device on the display responsive to the peripheral device being detected in a proximate location to the electronic device.

## Description

### BACKGROUND

The present invention relates to connections between electronic devices and peripherals, and, more particularly, to methods, systems, and computer program products for connecting a peripheral device to an electronic device by detecting the presence of the peripheral device using, for example, Near Field Communication (NFC) technology and/or Radio Frequency Identification (RFID) technology.

Electronic devices, such as mobile phones, often connect to peripheral or accessory devices, such as battery charging stands, computers, memory sticks, cameras, etc. Unfortunately, it may be difficult for some users to understand how to make such connections due to the different types of interfaces, cables, and the like that may be involved in joining the two devices. Moreover, as electronic devices and peripherals often have many connection ports, a user may be confused where to look on the electronic device and/or the peripheral device, e.g., side, top, bottom, etc. to find the correct connection ports for a given peripheral.

### SUMMARY

According to some embodiments of the present invention an electronic device is operated by detecting a presence of a peripheral device that is located proximate to the electronic device and displaying instructions on a display for connecting the peripheral device to the electronic device.

In other embodiments, detecting the presence of the peripheral device comprises detecting the presence of the peripheral device using Near Field Communication (NFC) technology.

In still other embodiments, detecting the presence of the peripheral device comprises detecting the presence of the peripheral device using Radio Frequency Identification (RFID) technology.

In still other embodiments, displaying instructions on the display further comprises displaying instructions on the display for operating the peripheral device.

In still other embodiments, the method further comprises transitioning the electronic device from a sleep state to a wake state responsive to detecting the presence of the peripheral device.

In still other embodiments, the method further comprises performing preparatory operations to facilitate a connection with the peripheral device responsive to transitioning the electronic device from the sleep state to the wake state.

In still other embodiments, the electronic device is a mobile terminal.

In further embodiments, an electronic device comprises a display, a detection module that is configured to detect a presence of a peripheral device that is located proximate to the electronic device and a peripheral management module that is configured to present instructions for connecting the peripheral device to the electronic device on the display responsive to the peripheral device being detected in a proximate location to the electronic device.

In still further embodiments, the detection module comprises a Near Field Communication (NFC) technology module.

In still further embodiments, the detection module comprises a Radio Frequency Identification (RFID) technology module.

In still further embodiments, the peripheral management module is further configured to present instructions for operating the peripheral device on the display responsive to detecting the presence of the peripheral device.

In still further embodiments, the peripheral management module is further configured to transition the electronic device from a sleep state to a wake state responsive to detecting the presence of the peripheral device.

In still further embodiments, the peripheral management module is further configured to perform preparatory operations to facilitate a connection with the peripheral device responsive to the electronic device being transitioned from the sleep state to the wake state.

In still further embodiments, the electronic device is a mobile terminal.

In other embodiments, a non-transitory computer program product for operating an electronic device comprises computer-readable program code embodied on a computer-readable medium. The computer readable program code comprises computer readable program code configured to detect a presence of a peripheral device that is located proximate to the electronic device and computer readable program code configured to display instructions on a display for connecting the peripheral device to the electronic device.

In still other embodiments, the computer readable program code configured to detect the presence of the peripheral device comprises computer readable program code configured to detect the presence of the peripheral device using Near Field Communication (NFC) technology.

In still other embodiments, the computer readable program code configured to detect the presence of the peripheral device comprises computer readable program code configured to detect the presence of the peripheral device using Radio Frequency Identification (RFID) technology.

In still other embodiments, the computer readable program code configured to display instructions on the display further comprises computer readable program code configured to display instructions on the display for operating the peripheral device.

In still other embodiments, the computer readable program code further comprises computer readable program code configured to transition the electronic device from a sleep state to a wake state responsive to detecting the presence of the peripheral device.

In still other embodiments, the computer readable program code further comprises computer readable program code configured to perform preparatory operations to facilitate a connection with the peripheral device responsive to transitioning the electronic device from the sleep state to the wake state.

### BRIEF DESCRIPTION OF THE DRAWINGS

Other features of the present invention will be more readily understood from the following detailed description of specific embodiments thereof when read in conjunction with the accompanying drawings, in which:
FIG. 1 is a block diagram of an electronic device that is configured to detect the presence of a peripheral device that is located proximate to the electronic device in accordance with some embodiments of the present invention;
FIG. 2 is a block diagram that illustrates an electronic device/mobile terminal in accordance with some embodiments of the present invention;
FIG. 3 is a block diagram that illustrates a software architecture of a peripheral device in accordance with some embodiments of the present invention;
FIGS. 4 and 5 are flowcharts that illustrate operations for connecting a peripheral device to an electronic device in accordance with some embodiments of the present invention; and
FIG. 6 is a block diagram that illustrates operations for providing instructions to connect a peripheral device to an electronic device in accordance with some embodiments of the present invention.

### DETAILED DESCRIPTION

While the invention is susceptible to various modifications and alternative forms, specific embodiments thereof are shown by way of example in the drawings and will herein be described in detail. It should be understood, however, that there is no intent to limit the invention to the particular forms disclosed, but on the contrary, the invention is to cover all modifications, equivalents, and alternatives falling within the spirit and scope of the invention as defined by the claims. Like reference numbers signify like elements throughout the description of the figures.

As used herein, the singular forms "a," "an," and "the" are intended to include the plural forms as well, unless expressly stated otherwise. It should be further understood that the terms "comprises" and/or "comprising" when used in this specification is taken to specify the presence of stated features, integers, steps, operations, elements, and/or components, but does not preclude the presence or addition of one or more other features, integers, steps, operations, elements, components, and/or groups thereof. It will be understood that when an element is referred to as being "connected" or "coupled" to another element, it can be directly connected or coupled to the other element or intervening elements may be present. Furthermore, "connected" or "coupled" as used herein may include wirelessly connected or coupled. As used herein, the term "and/or" includes any and all combinations of one or more of the associated listed items.

Unless otherwise defined, all terms (including technical and scientific terms) used herein have the same meaning as commonly understood by one of ordinary skill in the art to which this invention belongs. It will be further understood that terms, such as those defined in commonly used dictionaries, should be interpreted as having a meaning that is consistent with their meaning in the context of the relevant art and this specification and will not be interpreted in an idealized or overly formal sense unless expressly so defined herein.

As used herein, the term electronic device or "mobile terminal" may comprise a satellite or cellular radiotelephone with or without a multi-line display; a Personal Communications System (PCS) terminal that may combine a cellular radiotelephone with data processing, facsimile and data communications capabilities; a PDA that can include a radiotelephone, pager, Intemet/intranet access, Web browser, organizer, calendar and/or a global positioning system (GPS) receiver; and a conventional laptop and/or palmtop receiver or other appliance that includes a radiotelephone transceiver. Mobile terminals may also be referred to as "pervasive computing" devices.

For purposes of illustration, embodiments herein are described herein in the context of a mobile terminal. It will be understood, however, that the present invention is not limited to such embodiments and may be embodied generally as an electronic device that is configured to establish connections with one or more peripheral devices or accessories such as battery charging stands, computers, memory sticks, cameras, etc.

Some embodiments herein arise from a realization that a user may find it difficult to connect an accessory or peripheral device to an electronic device, such as a mobile terminal. In particular, it may not always be readily apparent which ports on the electronic device and/or the peripheral device are to be used for making the connection. Many users may also not understand the differences between the many types of cables and connectors used in connecting an electronic device and a peripheral, such as the difference between a micro USB cable and a micro HDMI cable. Cable differences can be even more complicated when mini and micro variants exist. It may also be difficult for a user to figure out where on the electronic device and/or peripheral to make the connection when there are several different connection ports on each device some of which may be covered under removal housing, for example. Some electronic devices may need to be placed into a particular state to establish a connection with a peripheral device or some other special setting may need to be applied. An inexperienced user may not be familiar with how to perform such setup operations.

Some embodiments herein may allow an electronic device to detect the presence of a peripheral device when the peripheral device is near or proximate to the electronic device. The electronic device can then display instructions for connecting the peripheral device to the electronic device. In some embodiments, short range communication technology, such as Near Field Communication (NFC) technology and/or Radio Frequency Identification (RFID) technology, can be used to detect the presence of the peripheral device near the electronic device. Instructions can also be displayed that instruct the user how to properly use the newly connected peripheral device. The electronic device can be awakened from a sleep state automatically upon detection of the peripheral device. This may reduce or eliminate the need for the electronic device to perform polling operations searching for any peripheral devices or accessories, which may reduce current consumption in the electronic device. Moreover, preparatory operations may be performed on the electronic device upon detection of the peripheral device to facilitate the establishment of a connection with the peripheral device. Thus, embodiments of the present invention may provide for an improved user experience in using an electronic device, such as a mobile phone and may also reduce current consumption in the electronic device by eliminating or reducing the need to poll for available peripheral devices and/or accessories and/or eliminating or reducing the need to maintain the electronic device in an awake or active state to facilitate a connection with a peripheral device or accessory.

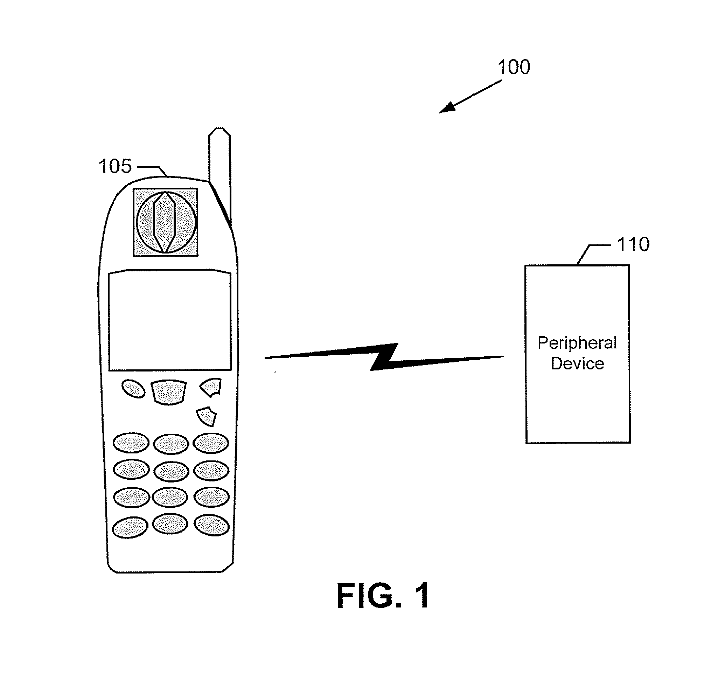

FIG. 1 illustrates apparatus 100 including an electronic device 105, which is embodied as a mobile terminal, and a peripheral device 110. The electronic device 105 and peripheral device 110 include technology that allows the electronic device 105 to detect the presence of the peripheral device 110 when the peripheral device 110 is located proximate to the electronic device 105. Upon detection of the presence of the peripheral device 110, the electronic device 105 may display instructions for connecting the peripheral device 110 to the electronic device 105. These instructions may further include information for using the peripheral device 110.

Although FIG. 1 illustrates exemplary communication between an electronic device 105 and a peripheral device 110, it will be understood that the present invention is not limited to such configurations, but is intended to encompass any configuration capable of carrying out the operations described herein.

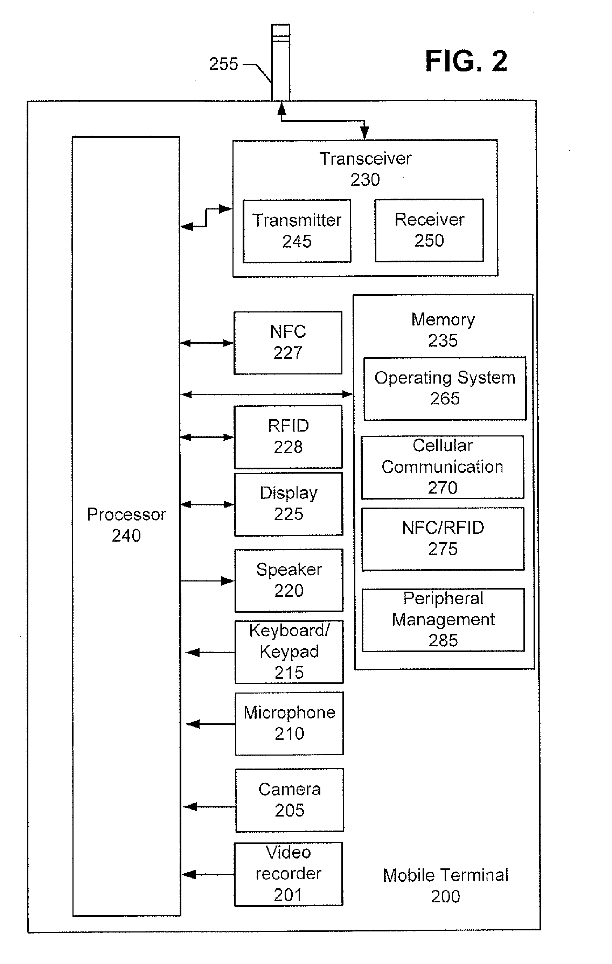

Referring now to FIG. 2, an exemplary mobile terminal 200 that may be used to implement a device, such as the electronic device 105 of FIG. 1, in accordance with some embodiments of the present invention, includes a video recorder 201, a camera 205, a microphone 210, a keyboard/keypad 215, a speaker 220, a display 225, a transceiver 230, and a memory 235 that communicate with a processor 240. The transceiver 230 comprises a transmitter circuit 245 and a receiver circuit 250, which respectively transmit outgoing radio frequency signals to base station transceivers and receive incoming radio frequency signals from the base station transceivers via an antenna 255. The radio frequency signals transmitted between the mobile terminal 200 and the base station transceivers may comprise both traffic and control signals (e.g., paging signals/messages for incoming calls), which are used to establish and maintain communication with another party or destination. The radio frequency signals may also comprise packet data information, such as, for example, cellular digital packet data (CDPD) information. The mobile terminal also includes an NFC module 227 for providing short-range communication functionality with other NFC equipped devices and systems. The NFC module 227 may communicate with other NFC equipped devices using magnetic field induction over the 13.56 MHz frequency band. NFC may have a maximum communication range of about 10 centimeters. An RFID module 228 is included that can operate as an RFID interrogator to read information from devices equipped with RFID tags.

The foregoing components of the mobile terminal 200 may be included in many conventional mobile terminals and their functionality is generally known to those skilled in the art.

The processor 240 communicates with the memory 235 via an address/data bus. The processor 240 may be, for example, a commercially available or custom microprocessor. The memory 235 is representative of the one or more memory devices containing the software and data used to operate the mobile terminal 200 as well as to detect the presence of a peripheral device that is located proximate to the mobile terminal 200 and to provide instructions for connecting the peripheral device to the mobile terminal 200. The memory 235 may include, but is not limited to, the following types of devices: cache, ROM, PROM, EPROM, EEPROM, flash, SRAM, and DRAM.

As shown in FIG. 2, the memory 235 may contain four or more categories of software and/or data: the operating system 265, a cellular communication module 270, NFC/RFID module 275, and/or a peripheral management module 285. The operating system 265 generally controls the operation of the mobile terminal 200. In particular, the operating system 265 may manage the mobile terminal's software and/or hardware resources and may coordinate execution of programs by the processor 240. The cellular communication module 270 may be configured to manage the cellular communication protocols that are used to allow the mobile terminal 200 to communicate with other devices and systems. The NFC/RFID module 270 may be configured to manage the NFC/RFID protocols that are used to allow the mobile terminal 200 to communicate with other NFC/RFID equipped devices and systems. The peripheral management module 285 may be configured to detect the presence of a peripheral device or accessory proximate to the mobile terminal 200 using the NFC/RFID module 275 along with the NFC module 227 and RFID module 228. The peripheral management module 285 may be further configured to display instructions for connecting the detected peripheral device or accessory to the mobile terminal 200 on the display 225. These instructions may further include information on how to use the peripheral device or accessory.

Although FIG. 2 illustrates an exemplary software and hardware architecture that may be used by an electronic device, such as the mobile terminal 200, to detect a peripheral device and provide instructions for connecting the peripheral device to the electronic device and using the peripheral device, in accordance with some embodiments of the present invention, it will be understood that the present invention is not limited to such a configuration, but is intended to encompass any configuration capable of carrying out the operations described herein.

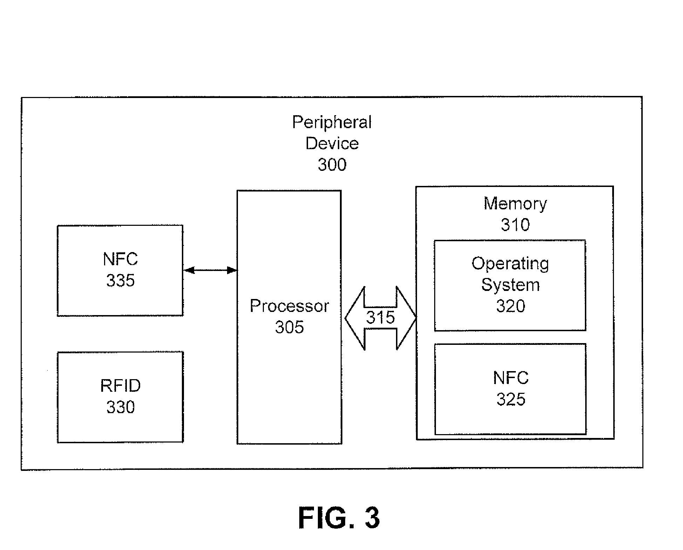

FIG. 3 illustrates a peripheral device 300, which includes a processor 305, a memory 310, an RFID tag 330, and an NFC module 335 that may be used in embodiments of the peripheral device 110 of FIG. 1 in accordance with some embodiments of the present invention. The processor 305 communicates with the memory 310 via an address/data bus 315. The processor 305 may be, for example, a commercially available or custom microprocessor. The memory 310 is representative of the one or more memory devices containing the software and data used to facilitate detection of the peripheral device 300 by an electronic device, such as the electronic device 105 of FIG. 1 and the mobile terminal 200 of FIG. 2 in accordance with embodiments of the present invention. The memory 310 may include, but is not limited to, the following types of devices: cache, ROM, PROM, EPROM, EEPROM, flash, SRAM, and DRAM.

As shown in FIG. 3, the memory 310 may contain up to two or more categories of software and/or data: an operating system 320 and a NFC module 325. In particular, the operating system 320 may manage the peripheral device's software and/or hardware resources and may coordinate execution of programs by the processor 305. The NFC module 325 may be configured to manage the NFC protocols that are used to allow the peripheral device 300 to communicate via the NFC module 335 with other NFC equipped devices and systems, such as the electronic device 105 of FIG. 1 and mobile terminal 200 of FIG. 2. The RFID tag 330 may be an active or passive tag that can allow the peripheral device 300 to be detected, for example, by an electronic device, such as the electronic device 105 of FIG. 1 and the mobile terminal 200 of FIG. 2 in accordance with embodiments of the present invention.

It will be understood that in various embodiments of the present invention the peripheral device 300 may include NFC technology, RFID technology, or both NFC and RFID technology to facilitate detection of the peripheral device 300 by an electronic device by an electronic device, such as the electronic device 105 of FIG. 1 and the mobile terminal 200 of FIG. 2.

Although FIG. 3 illustrates an exemplary peripheral device software architecture in accordance with some embodiments of the present invention, it will be understood that the present invention is not limited to such a configuration but is intended to encompass any configuration capable of carrying out operations described herein.

Computer program code for carrying out operations of devices, terminals, and/or systems discussed above with respect to FIGS. 1 - 3 may be written in a high-level programming language, such as Java, C, and/or C++, for development convenience. In addition, computer program code for carrying out operations of embodiments of the present invention may also be written in other programming languages, such as, but not limited to, interpreted languages. Some modules or routines may be written in assembly language or even micro-code to enhance performance and/or memory usage. It will be further appreciated that the functionality of any or all of the program modules may also be implemented using discrete hardware components, one or more application specific integrated circuits (ASICs), or a programmed digital signal processor or microcontroller.

The present invention is described hereinafter with reference to message flow, flowchart and/or block diagram illustrations of methods, devices, and/or computer program products in accordance with some embodiments of the invention. These message flow, flowchart and/or block diagrams further illustrate exemplary operations for operating an electronic device so as to detect the presence of a peripheral device or accessory that is located proximate to the electronic device and to display instructions for connecting the peripheral device to the electronic device in accordance with various embodiments of the present invention. It will be understood that each message/block of the message flow, flowchart and/or block diagram illustrations, and combinations of messages/blocks in the message flow, flowchart and/or block diagram illustrations, may be implemented by computer program instructions and/or hardware operations. These computer program instructions may be provided to a processor of a general purpose computer, a special purpose computer, or other programmable data processing apparatus to produce a machine, such that the instructions, which execute via the processor of the computer or other programmable data processing apparatus, create means for implementing the functions specified in the message flow, flowchart and/or block diagram block or blocks.

These computer program instructions may also be stored in a computer usable or computer-readable memory that may direct a computer or other programmable data processing apparatus to function in a particular manner, such that the instructions stored in the computer usable or computer-readable memory produce an article of manufacture including instructions that implement the function specified in the message flow, flowchart and/or block diagram block or blocks.

The computer program instructions may also be loaded onto a computer or other programmable data processing apparatus to cause a series of operational steps to be performed on the computer or other programmable apparatus to produce a computer implemented process such that the instructions that execute on the computer or other programmable apparatus provide steps for implementing the functions specified in the message flow, flowchart and/or block diagram block or blocks.

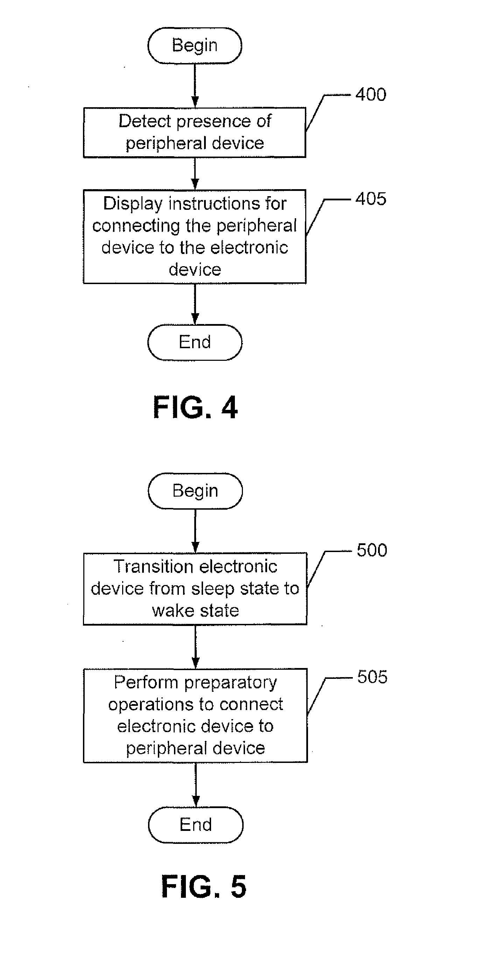

Operations for operating an electronic device, in accordance with some embodiments of the present invention, will now be described with reference to FIGS. 4, 5, and 6 and the device/system architectures of FIGS. 1 - 3. Referring now to FIG. 4, operations begin at block 400 where the electronic device 105 (e.g., mobile terminal 200) detects the presence of a peripheral device 110 located proximate to the electronic device 105 using, for example, NFC and/or RFID technology. Referring now to FIG. 5, in response to detecting the presence of the proximally located peripheral device 110, the electronic device 105 awakens from a sleep state to a wake state to prepare for a possible connection with the peripheral device 110 at block 500. At block 505, the electronic device 105 performs preparatory operations to establish a connection between the electronic device 105 and the peripheral device 110.

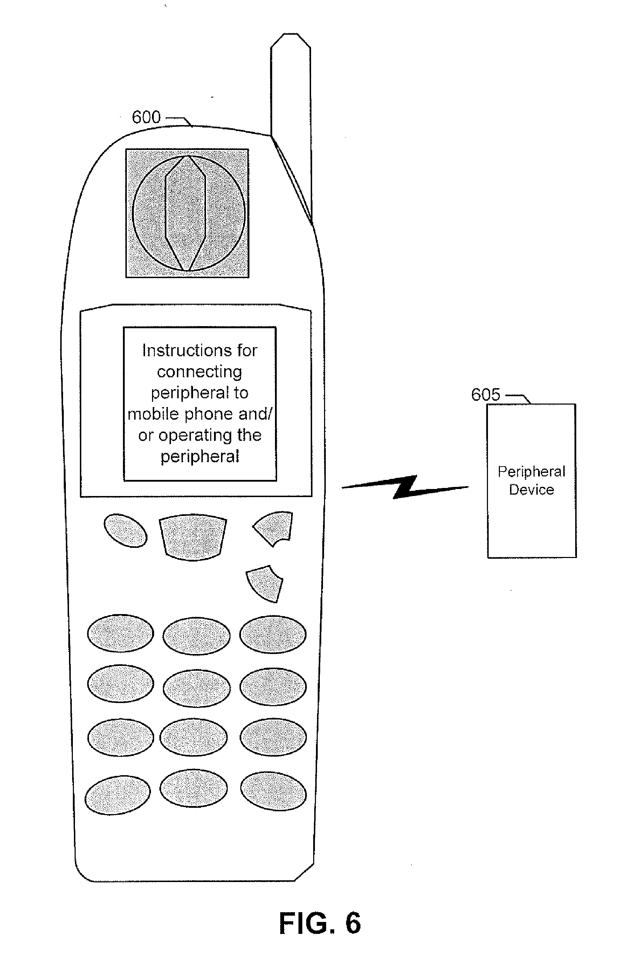

Returning to FIG. 4, the electronic device 105 displays instructions for connecting the peripheral device 110 to the electronic device at block 405. This is illustrated, for example, in FIG. 6 where the mobile terminal 600 detects the presence of the peripheral device 605 and provides instructions on the display of the mobile terminal 600 for connecting the peripheral device 605 to the mobile terminal 600. The instructions may provide information on what type of cable to use for the connection or how to set up a wireless connection between the mobile terminal 600 and the peripheral device 605. The user may be guided to the appropriate connection port (s) on the mobile terminal 600 and/or the peripheral device 605. Moreover, as shown in FIG. 6, these instructions may include information on how to operate the peripheral device.

The flowcharts of FIGS. 4 and5 illustrate the architecture, functionality, and operations of embodiments of the electronic device 105 and/or the peripheral device. In this regard, each block represents a module, segment, or portion of code, which comprises one or more executable instructions for implementing the specified logical function(s). It should also be noted that in other implementations, the function(s) noted in the blocks may occur out of the order noted in FIGS. 4 and 5. For example, two blocks shown in succession may, in fact, be executed substantially concurrently or the blocks may sometimes be executed in the reverse order, depending on the functionality involved.

Many variations and modifications can be made to the embodiments without substantially departing from the principles of the present invention. All such variations and modifications are intended to be included herein within the scope of the present invention, as set forth in the following claims.

## Claims

1. A method of operating an electronic device (105), comprising:
detecting a presence of a peripheral device (110) that is located proximate to the electronic device (105); and
displaying instructions on a display for connecting the peripheral device (110) to the electronic device (105).

2. The method of Claim 1, wherein detecting the presence of the peripheral device (110) comprises detecting the presence of the peripheral device (110) using Near Field Communication (NFC) technology.

3. The method of Claim 1, wherein detecting the presence of the peripheral device (110) comprises detecting the presence of the peripheral device (110) using Radio Frequency Identification (RFID) technology.

4. The method of Claim 1, wherein displaying instructions on the display further comprises displaying instructions on the display for operating the peripheral device (110).

5. The method of Claim 1, further comprising:
transitioning the electronic device (105) from a sleep state to a wake state responsive to detecting the presence of the peripheral device (110).

6. The method of Claim 5, further comprising:
performing preparatory operations to facilitate a connection with the peripheral device (110) responsive to transitioning the electronic device (105) from the sleep state to the wake state.

7. The method of Claim 1, wherein the electronic device (105) is a mobile terminal.

8. An electronic device (105,200), comprising:
a display (225);
a detection module (275) that is configured to detect a presence of a peripheral device that is located proximate to the electronic device (200,105); and
a peripheral management module (285) that is configured to present instructions for connecting the peripheral device to the electronic device on the display responsive to the peripheral device being detected in a proximate location to the electronic device.

9. The electronic device of Claim 8, wherein the detection module comprises a Near Field Communication (NFC) technology module.

10. The electronic device of Claim 8, wherein the detection module comprises a Radio Frequency Identification (RFID) technology module.

11. The electronic device of Claim 8, wherein the peripheral management module is further configured to present instructions for operating the peripheral device on the display responsive to detecting the presence of the peripheral device.

12. The electronic device of Claim 8, wherein the peripheral management module is further configured to transition the electronic device from a sleep state to a wake state responsive to detecting the presence of the peripheral device.

13. The electronic device of Claim 12, wherein the peripheral management module is further configured to perform preparatory operations to facilitate a connection with the peripheral device responsive to the electronic device being transitioned from the sleep state to the wake state.

14. The electronic device of Claim 8, wherein the electronic device is a mobile terminal.

15. A non-transitory computer program product for operating an electronic device comprising computer-readable program code embodied on a computer-readable medium, the computer readable program code comprising:
computer readable program code configured to detect a presence of a peripheral device that is located proximate to the electronic device; and
computer readable program code configured to display instructions on a display for connecting the peripheral device to the electronic device.
